(19) Europäisches Patentamt
European Patent Office
Office européen des brevets

(11) **EP 1 849 021 B1**

(12) **FASCICULE DE BREVET EUROPEEN**

(45) Date de publication et mention
de la délivrance du brevet:
**29.07.2009 Bulletin 2009/31**

(51) Int Cl.:
*G01S 13/00* (2006.01)    *G01S 13/87* (2006.01)

(21) Numéro de dépôt: **05804609.5**

(86) Numéro de dépôt international:
**PCT/EP2005/056028**

(22) Date de dépôt: **17.11.2005**

(87) Numéro de publication internationale:
**WO 2006/087043 (24.08.2006 Gazette 2006/34)**

(54) **PROCEDE DE LOCALISATION D'UN OBJET MOBILE A PARTIR DE MESURES DE DISTANCE ET DE VITESSE BISTATIQUES DE CET OBJET A L'AIDE D'UN SYSTEME MULTISTATIQUE**

VERFAHREN ZUR LOKALISIERUNG EINES MOBILEN OBJEKTS AUF GRUNDLAGE VON BISTATISCHEN ABSTANDS- UND GESCHWINDIGKEITSMESSUNGEN DES OBJEKTS UNTER VERWENDUNG EINES MULTISTATISCHEN SYSTEMS

METHOD FOR LOCATING A MOBILE OBJECT BASED ON BISTATIC DISTANCE AND SPEED MEASUREMENTS OF SAID OBJECT USING A MULTISTATIC SYSTEM

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **15.02.2005  FR 0501523**

(43) Date de publication de la demande:
**31.10.2007  Bulletin 2007/44**

(73) Titulaire: **THALES**
**92200 Neuilly sur Seine (FR)**

(72) Inventeurs:
• **RAMIERE, Grégory**
**F-33410 Laroque (FR)**
• **GARNIER, Gérard**
**F-91190 Gif sur Yvette (FR)**
• **MULLER, Daniel**
**F-92370 Chaville (FR)**
• **NEYME, Florence**
**F-75014 Paris (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-03/107033**    **US-A- 3 987 445**
**US-A- 4 048 637**    **US-A- 5 187 485**

**Description**

La présente invention se rapporte à un procédé de localisation d'un objet mobile à partir de mesures de distance et de vitesse bistatiques de cet objet, à l'aide d'un système multistatique.

La technique de localisation d'un objet mobile à l'aide de systèmes multistatiques fait classiquement appel à l'exploitation conjointe de mesures élémentaires bistatiques de la distance entre chacun des émetteurs et cet objet et entre cet objet et respectivement chacun des récepteurs. Cette exploitation consiste à rechercher l'intersection des lieux d'ambiguïté correspondant à chaque mesure élémentaire, en l'occurrence des hyperboles ou des ellipses, selon la référence de temps utilisé, pour localiser de façon unique dans l'espace la position de cet objet.

Une telle technique est utilisée par exemple dans les systèmes de localisation des transpondeurs secondaires des aéronefs et utilisés en contrôle de trafic aérien.

Cette technique connue présente les limitations suivantes :

- la géométrie quasi plane de l'implantation des récepteurs (si ce sont des récepteurs au sol) ne permet qu'une localisation dans un plan horizontal, sans fournir l'altitude de l'objet,
- si les signaux reçus de différentes cibles présentes simultanément dans un même espace n'ont pas un support temporel disjoint, l'association des mesures élémentaires issues d'une même cible devient quasiment impossible, car la combinatoire des cas possibles devenant beaucoup trop importante pour une exploitation pratique.

La présente invention a pour objet un procédé de localisation d'un objet mobile, en particulier d'un objet volant, à partir de mesures de distance et de vitesse bistatiques de cet objet à l'aide d' un système multistatique. Par « localisation », on entend selon la présente invention la position 3D de cet objet et la détermination de son vrai vecteur vitesse en coordonnées 3D également. Ce procédé doit permettre de localiser cet objet le plus précisément possible dans l'espace, c'est-à-dire en mesurant ses coordonnées dans un repère à trois dimensions, et ce, même lorsque cet objet se situe dans un environnement pouvant comporter beaucoup d'autres objets mobiles.

On connaît des procédés de localisation à partir de mesures bistatiques. En particulier le brevet US 5 187 485 décrit un procédé de détermination de la position absolue d'un objet mobile au moyen d'un système bistatique formé avec un récepteur GPS et quatre satellites GPS, par la résolution de quatre équations associées, qui correspond à la recherche du point d'intersection des surfaces de quatre ellipsoïdes.

Le procédé conforme à l'invention est un procédé de localisation d'un objet mobile à partir de mesures de distance et de vitesse bistatiques de cet objet à l'aide d'un système multistatique, et il est caractérisé en ce que :

- on associe au moins deux couples de distances bistatiques tels que pour chaque couple les deux ellipsoïdes qui les déterminent aient un foyer commun, on résout pour chaque couple, le point d'intersection des deux ellipsoides à différentes altitudes, pour établir pour chaque point d'intersection, les équations de ses coordonnées en x et y en fonction de l'altitude z,
- on calcule les distances $D_i(z)$ entre les points d'intersection pris deux à deux, et on résoud leurs dérivées par rapport à la variable z, pour calculer les distances minimales, et on retient la plus petite de ces distances minimales, obtenue pour une valeur d'altitude $z_{avion}$,,
- on calcule les coordonnées cartésiennes en trois dimensions de cet objet, données sur l'axe des x, respectivement sur l'axe des y, par le barycentre des coordonnées en x, respectivement en y, des deux points d'intersection correspondant à ladite plus petite distance retenue, et sur l'axe des z, par ladite valeur $Z_{avion}$,

et en ce que, connaissant les coordonnées de l'objet et au moins trois vitesses bistatiques, on déduit la direction et le module du vrai vecteur vitesse 3D de l'objet mobile.

Selon une caractéristique avantageuse de l'invention, on prédit la position de l'objet mobile à l'étape suivante du calcul, et donc son altitude z prédite, et on affine l'optimisation du calcul de z autour du z prédit en ne gardant dans tous lesdits couples de distances bistatiques que les n plus petites, avec n=3 de préférence.

La présente invention sera mieux comprise à la lecture de la description détaillée d'un mode de réalisation, pris à titre d'exemple non limitatif et illustré par le dessin annexé, sur lequel :

- la figure 1 est un schéma simplifié de trois ellipses résultant d'une coupe dans un plan horizontal des ellipsoïdes relatifs aux distances bistatiques d'un objet mobile, telles qu'utilisées par le procédé de l'invention, et
- la figure 2 est un schéma simplifié explicitant la façon de déterminer la direction et le module d'un objet volant à partir de la connaissance des ellipsoïdes de la figure 1.

La présente invention est décrite ci-dessous en référence à la localisation dans l'espace d'un aéronef (appelé ici : avion), mais il est bien entendu qu'elle n'est pas limitée à cette seule application, et qu'elle peut être mise en oeuvre pour la localisation de tout objet mobile, en particulier un objet volant, mais non exclusivement. Cette localisation est mise en oeuvre à l'aide d'un système multistatique à plusieurs émetteurs et récepteurs. L'invention consiste à exploiter conjointement les mesures de distances bistatiques et de vitesses Doppler bistatiques des avions à localiser, ces mesures étant effectuées sur un ensemble de plusieurs (au moins trois) couples « émetteur-récepteur ». Ces couples sont déterminés de la façon suivante.

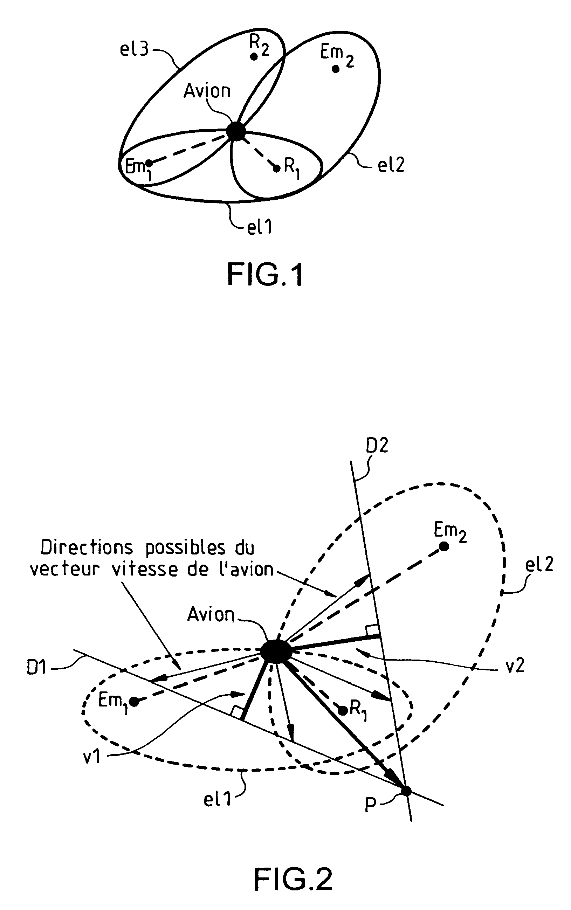

On a représenté en figure 1 l'intersection d'un plan horizontal (qui est ici le plan du dessin) et de trois ellipsoïdes (E1, E2, E3) particuliers relatifs à un même avion à localiser, dans un système multistatique (non représenté en détail sur la figure). Les traces, dans le plan du dessin, des ellipsoïdes, sont trois ellipses el1, el2 et el3. Ces ellipsoïdes sont tels que leurs foyers sont, de façon connue en soi, les émetteurs et les récepteurs du système bistatique de localisation. On obtient ainsi un système de trois équations (définies par les équations respectives des ellipsoïdes) à trois inconnues, qui a, théoriquement, une solution permettant de calculer la position 3D de l'avion en question, mais il n'existe pas de méthode directe pour le résoudre (il s'agit en fait de la résolution d'une équation du 8è degré).

Selon l'invention, les ellipsoïdes sont tels que, pris deux à deux, ils ont un foyer commun. Dans l'exemple de la figure 1, on a pris trois tels couples d'ellipsoïdes (E1, E2 et E3), mais on pourrait en prendre davantage. Dans cet exemple, le système multistatique comprend deux émetteurs Em1 et Em2 et deux récepteurs R1 et R2. Les ellipsoïdes E1 et E2 ont comme foyer commun R1, tandis que E1 et E3 ont comme foyer commun Em1. Grâce à cette caractéristique de l'invention, la résolution de ce système d'équations peut se faire plus facilement qu'avec ladite méthode directe. En outre, la connaissance des vecteurs vitesse bistatiques pour chacun des trois systèmes bistatiques permet de calculer le vecteur vitesse 3D de l'avion.

Pour la mise en oeuvre de l'invention, on commence par rechercher les intersections des couples d'ellipsoïdes précités, à foyer commun pour chacun de ces couples, et ce, dans un plan horizontal. On procède alors de la façon suivante :

-   on appelle $(x, y, z)$ les coordonnées cartésiennes en 3D de l'avion à localiser, $(x_{e1}, y_{e1}, z_{e1})$ celles de l'émetteur Em1 et $(x_{r1}, y_{r1}, z_{r1})$ celles du récepteur R1.

Soient :

-   $d_a$ : la distance entre Em1 et l'avion + la distance entre l'avion et R1,
-   $d_b$ : la distance entre R1 et l'avion + la distance entre l'avion et Em2,
-   $d_c$ : la distance entre Em1 et l'avion + la distance entre l'avion et R2.

On obtient, de façon classique, l'équation des trois ellipsoïdes précités, respectivement E1, E2 et E3 :

$$\begin{cases} d_a = \sqrt{(x - x_{e1})^2 + (y - y_{e1})^2 + (z - z_{e1})^2} + \sqrt{(x - x_{r1})^2 + (y - y_{r1})^2 + (z - z_{r1})^2} \\ d_b = \sqrt{(x - x_{r1})^2 + (y - y_{r1})^2 + (z - z_{r1})^2} + \sqrt{(x - x_{e2})^2 + (y - y_{e2})^2 + (z - z_{e2})^2} \\ d_c = \sqrt{(x - x_{e1})^2 + (y - y_{e1})^2 + (z - z_{e1})^2} + \sqrt{(x - x_{r2})^2 + (y - y_{r2})^2 + (z - z_{r2})^2} \end{cases}$$

Dans une phase dite d'initialisation, c'est-à-dire pour la première mesure effective des distances bistatiques de l'avion, et pour une altitude z donnée de cet avion, on obtient les coordonnées des points d'intersection des couples d'ellipsoïdes de la façon suivante, pour trois plans horizontaux coupant ces ellipsoïdes et ayant les altitudes respectives $z_1, z_2, z_3$. Dans le présent exemple, on se contente de trois valeurs de z, qui sont suffisantes pour la précision recherchée en phase d'initialisation. De préférence, dans cette phase d'initialisation, ces trois valeurs de z sont prises très différentes les unes des autres, par exemple 0, 500m et 1000m d'altitude. On obtient alors les valeurs suivantes de ces points d'intersection, pour les différents couples d'ellipsoïdes précités :

|  | E1∩ E2 | E1∩ E3 | E2∩ E3 |
|---|---|---|---|
| z=$z_1$ | (x1, y1) | (x'1, y'1) | (x"1, y"1) |
| z=$z_2$ | (x2, y2) | (x'2, y'2) | (x"2, y"2) |
| z=$z_3$ | (x3, y3) | (x'3, y'3) | (x"3, y"3) |

Chaque coordonnée (xi, yi), (x'i, y'i), (x"i, y"i) est donc fonction de z et on peut représenter toutes ces coordonnées par un polynôme du second degré (3 valeurs disponibles par coordonnée) :

$$x=a_xz^2+b_xz+c_x \qquad x'=a'_xz^2+b'_xz+c'_x \qquad x''=a''_xz^2+b''_xz+c''_x$$
$$y=a_yz^2+b_yz+c_y \qquad y'=a'_yz^2+b'_yz+c'_y \qquad y''=a''_yz^2+b''_yz+c''_y$$

On calcule ensuite les équations des différentes distances $D_i$, en fonction de z, entre les points d'intersection M (x, y), M'(x', y') et M''(x'', y''), puis on dérive, selon z, les équations des différentes distances $D_i$ (z) et on les résout pour obtenir les minima de ces distances $D_i$ (z). Ces minima correspondent à des distances minimales entre les points M, M' et M'' pris deux à deux. Selon une caractéristique avantageuse de l'invention, on retient parmi ces distances minimales la plus petite. Soit $z_{avion}$ cette plus petite distance ; elle correspond à un couple de points, par exemple M(x, y) et M'(x', y'), qui résultent du calcul des polynômes du second degré mentionnés ci-dessus, dans lesquels on prend z= $z_{avion}$. On en déduit la position 3D de l'avion :

- selon l'axe des x, c'est le barycentre des deux valeurs calculées de x, par exemple (x+x')/2,
- selon l'axe des y, c'est le barycentre des deux valeurs calculées de y, par exemple (y+y')/2,
- selon l'axe des z, c'est bien entendu $z_{avion}$.

Enfin, on calcule le vrai vecteur vitesse 3D de l'avion à partir de la connaissance de la position 3D et du module de la vitesse bistatique de l'avion dans au moins trois des systèmes bistatiques précités. Ce calcul est illustré par le schéma de la figure 2. Dans ce schéma, qui, pour des raisons de clarté du dessin, ne représente que deux des trois systèmes bistatiques choisis dans un plan coupant deux ellipsoïdes, et qui est le plan du dessin. Dans ce plan, on a tracé les ellipses el1 et el2 relatives aux émetteurs et récepteurs Em1, Em2, R1, R2, l'avion à localiser étant situé à l'une des deux intersections de ces ellipses dont le foyer commun est R1. De façon connue en soi, on calcule les valeurs des modules v1 et v2 des vitesses Doppler bistatiques de l'avion pour les ellipses el1 et el2, et on reporte sur le schéma les segments correspondants de telle façon que le segment v1 soit la bissectrice de l'angle formé par les segments (avion-Em1), (avion-R1) et v2 la bissectrice de l'angle formé par les segments (avion-R1), (avion-Em2). On trace ensuite la droite D1 (qui est la trace, seule visible dans le plan du dessin, du plan PL1 perpendiculaire au segment v1 et passant par l'extrémité de celui-ci), puis la droite D2 (qui est la trace, seule visible dans le plan du dessin, du plan PL2 perpendiculaire au segment v2 et passant par l'extrémité de celui-ci). Les droites D1 et D2 se coupent en un point P. Ces deux plans PL1 et PL2, qui passent respectivement par D1 et D2, sont les lieux géométriques des positions potentielles de l'extrémité du vrai vecteur vitesse de l'avion (et ayant pour origine cet avion) et se coupent selon une droite $D_{1,2}$ passant par le point P et perpendiculaire au plan du dessin. On procède de même pour un autre couple de vitesses bistatiques (par exemple v2 et une troisième vitesse v3), et on obtient un premier plan PL2 passant par D2 et un autre plan PL3 (qui n'est pas dans le plan du dessin). Ces deux plans PL2 et PL3 se coupent selon une autre droite $D_{2,3}$ (non visible sur le dessin) qui, elle-même, coupe $D_{1,2}$ en un point P1 (non visible sur le dessin) L'extrémité du vrai vecteur vitesse est ainsi ce point P1.

Après cette phase d'initialisation, lorsque l'avion a été localisé et son vecteur vitesse déterminé, on entretient le processus de poursuite de l'avion pour être à même de déterminer le plus précisément et le plus facilement possible à chaque instant la position et la vitesse de l'avion.

En pratique, un système multistatique comporte généralement un grand nombre d'émetteurs et de récepteurs, et plus ce nombre est élevé, plus il existe de systèmes bistatiques intrinsèques, et donc un nombre encore plus élevé de distances bistatiques calculées. Il en résulte une complexité encore plus rapidement croissante du procédé de localisation de l'invention. Pour résoudre ce problème, une autre caractéristique de l'invention permet de simplifier le procédé de calcul d'entretien grâce à la prédiction de la position de l'avion. Cette prédiction se fait de la façon suivante. A partir de la connaissance de la position 3D de l'avion et de son vecteur vitesse à l'instant t, on calcule la position de l'avion à l'instant t+Δt (la valeur de Δt dépendant en particulier de la vitesse et de la trajectoire de l'avion et de la précision des mesures, ce afin de ne pas prendre Δt trop élevé pour éviter une prédiction trop approximative, ou trop petit pour ne pas faire de calculs intermédiaires inutiles). On calcule ainsi, comme exposé ci-dessus, l'altitude de l'avion à l'instant t+Δt, à savoir $z_{prédit}$. Connaissant $z_{prédit}$, on refait tous les calculs précédents (depuis la première étape de calcul des points d'intersection de couples d'ellipsoïdes jusqu'au calcul du vecteur vitesse 3D), en prenant à la première étape une fourchette de valeurs de z (z1, z2, z3) beaucoup moins large que celle mentionnée ci-dessus en exemple, et maintenant centrée autour de $z_{prédit}$, par exemple 0,8 $z_{prédit}$ , $z_{prédit}$ et 1,2 $z_{prédit}$. On simplifie les calculs en prenant parmi toutes les valeurs de distances bistatiques disponibles de préférence les trois les plus faibles (présentant le meilleur rapport signal/bruit).

Parmi les applications possibles de l'invention, on peut citer son utilisation, dans un système multistatique de détection et de localisation de cibles à faible coût, destiné à la détection dans une zone de surveillance, par exemple au voisinage de la zone d'approche d'un aéroport, d'intrus à faible surface équivalente radar, ou destiné à la protection d'un site sensible. Le dispositif permettant d'effectuer les mesures de distances bistatiques et de vitesse Doppler bistatiques est basé sur l'exploitation d'un ou de plusieurs récepteurs, associés, simultanément ou non, à :

- un ensemble d'émetteurs coopératifs (émettant une forme d'onde déterministe et maîtrisée),
- un ensemble d'émetteurs classiques de diffusion à modulation de fréquence,
- un ensemble d'émetteurs de diffusion à formes d'onde OFDM (tels que des émetteurs DAB ou DVBT),
- un ensemble d'émetteurs de diffusion dont les signaux émis comportent des raies à position déterministe, par exemple des émetteurs de télévision analogique.

En conclusion, l'invention permet, y compris en situation de détection d'objets volants multiples, d'obtenir une mesure pratiquement instantanée de la position des objets à localiser en 3D (en coordonnées dans un plan horizontal et en altitude) et de leur vecteur vitesse en module et en direction (en 3D ). La précision obtenue grâce au procédé de l'invention est directement liée à la précision de mesure des distances bistatiques. Dans le cas de configurations typiques de distribution géométrique (c'est-à-dire des configurations pour lesquelles les émetteurs et récepteurs sont disposés aux sommets de figures géométriques simples, telles que des rectangles), une précision de distance bistatique élémentaire de quelques mètres permet d'atteindre des précisions dans un plan horizontal de quelques mètres, et des précisions en altitude de l'ordre de grandeur d'une dizaine de mètres.

**Revendications**

1. Procédé de localisation d'un objet mobile à partir de mesures de distance et de vitesse bistatiques de cet objet à l'aide d'un système multistatique, **caractérisé en ce que** :

   - on associe au moins deux couples de distances bistatiques tels que pour chaque couple les deux ellipsoïdes qui les déterminent aient un foyer commun, on résout pour chaque couple, le point d'intersection des deux ellipsoides à différentes altitudes, pour établir pour chaque point d'intersection, les équations de ses coordonnées en x et y en fonction de l'altitude z,
   - on calcule les distances $D_i(z)$ entre les points d'intersection pris deux à deux, et on résoud leurs dérivées par rapport à la variable z, pour calculer les distances minimales, et on retient la plus petite de ces distances minimales, obtenue pour une valeur d'altitude $z_{avion}$,,
   - on calcule les coordonnées cartésiennes en trois dimensions de cet objet, données sur l'axe des x, respectivement sur l'axe des y, par le barycentre des coordonnées en x, respectivement en y, des deux points d'intersection correspondant à ladite plus petite distance retenue, et sur l'axe des z, par ladite valeur $z_{avion}$,

   et **en ce que**, connaissant les coordonnées de l'objet et au moins trois vitesses bistatiques, on déduit la direction et le module du vrai vecteur vitesse 3D de l'objet mobile.

2. Procédé selon la revendication 1, **caractérisé en ce que** l'on prédit la position de l'objet mobile à l'étape suivante du calcul, et donc son altitude z prédite, et que l'on affine l'optimisation du calcul de z autour du z prédit en ne gardant dans tous lesdits couples de distances bistatiques que les n plus petites.

3. Procédé selon la revendication 2, **caractérisé en ce que** l'on prend n=3.

**Claims**

1. Method for locating a mobile object on the basis of bistatic distance and speed measurements of this object using a multistatic system, **characterized in that**:

   - at least two bistatic distance pairs are associated such that for each pair the two ellipsoids which determine them have a common focus, for each pair the intersection point of the two ellipsoids is solved at various altitudes, so as to establish for each intersection point, the equations of its x and y coordinates as a function of the altitude z,
   - the distances $D_i(z)$ between the intersection points taken pairwise are calculated, and their derivatives with respect to the variable z are solved so as to calculate the minimum distances, and the smallest of these minimum distances is retained, obtained for an altitude value $z_{avion}$,
   - the three-dimensional Cartesian coordinates of this object are calculated, given on the x axis, respectively on the y axis, by the barycentre of the x coordinates, respectively y coordinates, of the two intersection points corresponding to said smallest distance retained, and on the z axis, by said value $z_{avion}$,

and **in that**, having ascertained the coordinates of the object and at least three bistatic speeds, the direction and the modulus of the true 3D speed vector of the mobile object are deduced.

2. Method according to Claim 1, **characterized in that** the position of the mobile object at the next step of the calculation, and therefore its predicted altitude z, is predicted, and that the optimization of the calculation of z about the predicted z is refined by keeping in all said bistatic distance pairs only the n smallest ones.

3. Method according to Claim 2, **characterized in that** n is taken equal to 3.


**Patentansprüche**

1. Verfahren zur Lokalisierung eines beweglichen Gegenstands ausgehend von bistatischen Entfernungs- und Geschwindigkeitsmessungen dieses Gegenstands mit Hilfe eines multistatischen Systems, **dadurch gekennzeichnet, dass**:

- mindestens zwei bistatische Entfernungspaare derart zugeordnet werden, dass für jedes Paar die zwei Ellipsoide, die sie bestimmen, einen gemeinsamen Brennpunkt haben, für jedes Paar der Schnittpunkt der zwei Ellipsoide in verschiedenen Höhen aufgelöst wird, um für jeden Schnittpunkt die Gleichungen seiner x- und y-Koordinaten in Abhängigkeit von der Höhe z zu erstellen;
- die Entfernungen $D_i(z)$ zwischen den Schnittpunkten paarweise genommen berechnet werden, und ihre Ableitungen bezüglich der Variablen z aufgelöst werden, um die minimalen Entfernungen zu berechnen, und die kleinste dieser minimalen Entfernungen genommen wird, die für einen Höhenwert $z_{avion}$ erhalten wird,
- die dreidimensionalen kartesischen Koordinaten dieses Gegenstands berechnet werden, die auf der x- Achse bzw. auf der y- Achse durch das Baryzentrum der x- Koordinaten bzw. der y- Koordinaten der zwei Schnittpunkte entsprechend der gewählten kleinsten Entfernung und auf der z- Achse durch den Wert $z_{avion}$ angegeben werden,

und dass in Kenntnis der Koordinaten des Gegenstands und von mindestens drei bistatischen Geschwindigkeiten die Richtung und der Modul des wahren 3D-Geschwindigkeitsvektors des beweglichen Gegenstands abgeleitet werden.

2. Verfahren nach Anspruch 1, **dadurch gekennzeichnet, dass** die Position des beweglichen Gegenstands im folgenden Schritt der Berechnung, und somit seine vorhergesagte Höhe z, vorhergesagt wird, und dass die Optimierung der Berechnung von z um das vorhergesagte z verfeinert wird, indem in allen bistatischen Entfernungspaaren nur die n kleinsten behalten werden.

3. Verfahren nach Anspruch 2, **dadurch gekennzeichnet, dass** n=3 genommen wird.

FIG.1

FIG.2

**EP 1 849 021 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5187485 A